# EUROPEAN PATENT APPLICATION

(11) **EP 2 355 493 A1**
(43) Date of publication of application: **10.08.2011**
(21) Application number: 10191189.9
(22) Date of filing: 15.11.2010
(51) Int. Cl.: H04N 5/44, H04N 5/445, G06F 3/033, G06F 3/03, G06F 3/01

(54) **Display device**

(30) Priority: 03.12.2009 TW 98222636
(71) Applicant: Himax Media Solutions, Inc., Tainan County 74148 (TW)
(72) Inventor: Liu, Shu-Ming, 74148, Tainan County (TW); Bu, Lin-Kai, 74148, Tainan County (TW); Chen, Kuei-Hsiang, 74148, Tainan County (TW)
(74) Representative: Becker Kurig Straus

(57) **Abstract**

A display device including a remote control unit and a display panel unit is provided. The display panel unit includes a plurality of optical receivers and a track recognizer. The remote control unit emits a light beam. The optical receivers receive the light beam and convert the light beam into a plurality of sensing voltages. The track recognizer generates a control command according to the sensing voltages so that the display panel unit sets an on-screen display (OSD).

## Description

### BACKGROUND OF THE INVENTION

### 1. Field of the Invention

The present invention generally relates to a display device, and more particularly, to a display device with a remote control unit.

### 2. Description of Related Art

In order to allow the user to have a delightful visual enjoyment, a display devices is usually equipped with an on-screen display (OSD) function for displaying image features on the screen. Accordingly, the user can adjust a corresponding parameter (for example, channel, volume, brightness, image size, etc) according to his/her requirement. In an existing display device, the OSD is usually controlled (to adjust aforementioned parameters) through buttons. However, along with the development of technologies, display devices are equipped with more and more functions. Accordingly, an increasing number of buttons is disposed on each display device, and the operation of these buttons is made very complicated. In addition, it is complicated to select or set functional options on a display device through buttons. Accordingly, the user may feel inconvenient to use the display device. Moreover, the disposed buttons take up the hardware space in the display device.

### SUMMARY OF THE INVENTION

Accordingly, the present invention is directed to a display device, wherein an on-screen display (OSD) of a display panel unit is set by using a remote control unit so that the operation of a user is made very convenient.

The present invention provides a display device including a remote control unit and a display panel unit. The display panel unit includes a plurality of optical receivers and a track recognizer. The remote control unit emits a light beam. The optical receivers receive the light beam and convert the light beam into a plurality of sensing voltages. The track recognizer generates a control command according to the sensing voltages so that the display panel unit sets an OSD.

According to an embodiment of the present invention, the track recognizer includes an analog-to-digital converter (ADC) and a microcontroller. The ADC converts the sensing voltages into a plurality of digital information. The microcontroller is electrically connected to the ADC through a programmable peripheral interface, and which generates the control command according to the digital information.

According to an embodiment of the present invention, the display device further includes a panel controller. The panel controller is electrically connected to the track recognizer, and which sets the OSD according to the control command.

As described above, in the present invention, the remote control unit emits a light beam to the display panel unit by, and the track recognizer in the display panel unit obtains a moving track of the remote control unit based on the sensing voltages generated by the optical receivers and generates a corresponding control command. Thus, a user can select or set options in the OSD by simply waving the remote control unit. In other words, the present invention increases the convenience in the user's operation and reduces the consumption of the hardware space in the display panel unit.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a diagram of a display device according to an embodiment of the present invention.

FIG. 2 is a diagram illustrating the appearance of a display device 100 according to an embodiment of the present invention.

FIG. 3 is a flowchart illustrating the operation mechanism of a display device.

FIG. 4 is a diagram illustrating a plurality of specific tracks.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

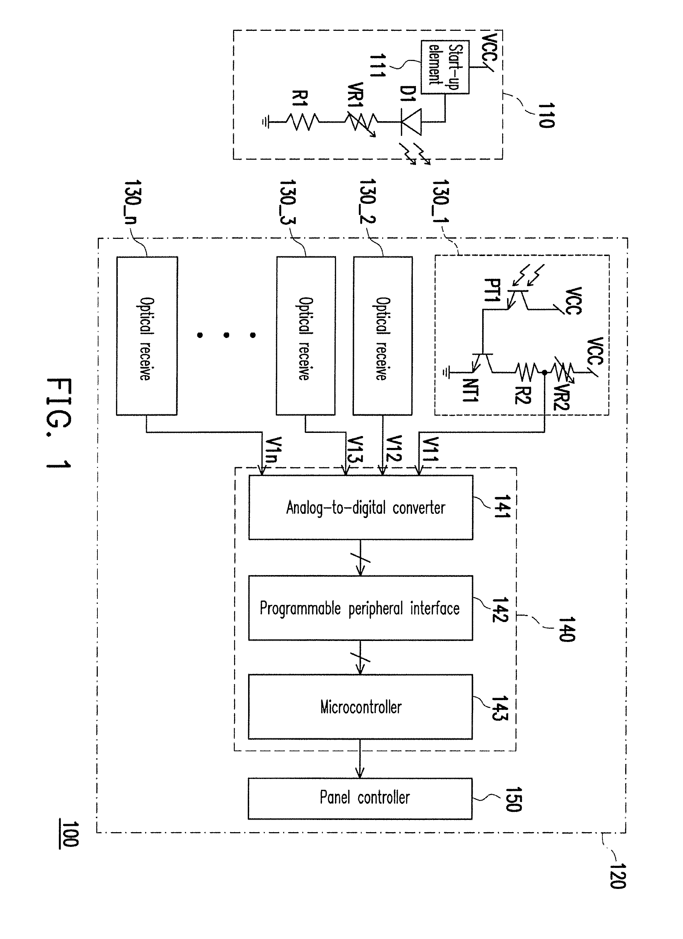

FIG. 1 is a diagram of a display device according to an embodiment of the present invention. Referring to FIG. 1, the display device 100 includes a remote control unit 110 and a display panel unit 120. The remote control unit 110 includes a start-up element 111, a light emitting diode (LED) D1, a variable resistor VR1, and a resistor R1. The display panel unit 120 includes a plurality of optical receivers 130_1-130_n, a track recognizer 140, and a panel controller 150.

Regarding the circuit structure of the remote control unit 110, the start-up element 111 receives a supply voltage VCC. The first end of the LED D1 is electrically connected to the start-up element 111, and the second end thereof is electrically connected to the first end of the variable resistor VR1. The first end of the resistor R1 is electrically connected to the second end of the variable resistor VR1, and the second end thereof is electrically connected to the ground. In an actual application, the start-up element 111 may be a button or a touch switch. Thus, when a user holds the remote control unit 110, the user can turn on the start-up element 111 by pressing down or touching the start-up element 111.

After the start-up element 111 is turned on, the supply voltage VCC received by the start-up element 111 is transmitted to the LED D 1 so that the LED D1, the variable resistor VR1, and the resistor R1 constitute a current loop. In other words, when the user holds the remote control unit 110 and presses (or touches) the start-up element 111 on the remote control unit 110, a light beam is emitted by the remote control unit 110. It should be mentioned that herein the LED D1 may be an infrared LED, and the infrared LED may generate an infrared light as the light beam emitted by the remote control unit 110.

Regarding the circuit structure of the display panel unit 120, the optical receivers 130_1-130_n respectively receive the light beam emitted by the remote control unit 110 and respectively generate a sensing voltage. For example, the optical receiver 130_1 includes a photo transistor PT1, a variable resistor VR2, a resistor R2, and a NPN transistor NT1. The photo transistor PT1 operates at the supply voltage VCC to detect the light beam emitted by the remote control unit 110. The first end of the variable resistor VR2 is electrically connected to the supply voltage VCC, and the second end thereof is electrically connected to the first end of the resistor R2. The first end of the NPN transistor NT1 is electrically connected to the second end of the resistor R2, the second end thereof is electrically connected to the ground, and the control end thereof is electrically connected to the photo transistor PT1.

Regarding the overall operation of the optical receiver 130_1, the photo transistor PT1 generates a leakage current according to the power carried by the received light beam and drives the NPN transistor NT1 with the leakage current. Accordingly, the variable resistor VR2, the resistor R2, and the NPN transistor NT1 constitute a corresponding current loop, such that the voltages over the variable resistor VR2 and the resistor R2 vary correspondingly. Thus, the optical receiver 130_1 can output a corresponding sensing voltage V11 according to the power carried by the received light beam. Similarly, because the optical receivers 130_2-130_n have the same circuit structure as the optical receiver 130_1, the optical receivers 130_2-130_n also generate sensing voltages V12-Vln according to the power carried by the received light beam.

On the other hand, the track recognizer 140 includes an analog-to-digital converter (ADC) 141, a programmable peripheral interface 142, and a microcontroller 143. The ADC 141 is electrically connected to the optical receivers 130_1-130_n, and the microcontroller 143 is electrically connected to the ADC 141 through the programmable peripheral interface 142. Regarding the overall operation of the display device 100, the sensing voltage V11-Vln generated by the optical receivers 130_1-130_n are converted into corresponding digital information by the ADC 141.

In order to allow the microcontroller 143 to receive each digital information, the programmable peripheral interface 142 is adopted for extending the input/output ports of the microcontroller 143, so that the microcontroller 143 can determine the moving track of the remote control unit 110 (waved by the user) based on the digital information (converted from the sensing voltage Vll-Vln). In addition, the microcontroller 143 further generates a corresponding control command according to the moving track. The panel controller 150 sets an on-screen display (OSD) of the display panel unit 120 according to the control command. Accordingly, the user can select or set a functional option in the OSD by simply waving the remote control unit 110. Such a technique makes the operation of the user very convenient. As to the display panel unit 120, since it is not needed to dispose a plurality of buttons to accomplish the OSD setting operations, less hardware space in the display panel unit 120 is consumed.

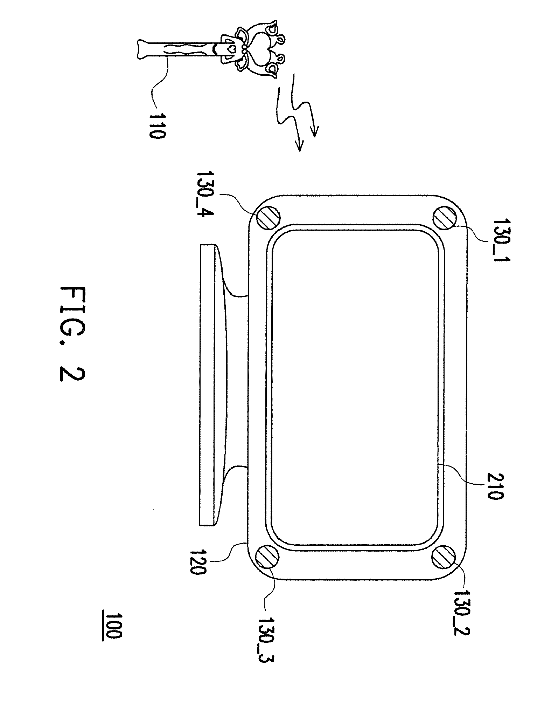

The interaction between the remote control unit 110 and the display panel unit 120 will be further explained below so that those having ordinary knowledge in the art can fully understand the present embodiment. FIG. 2 is a diagram illustrating the appearance of a display device 100 according to an embodiment of the present invention. As shown in FIG. 2, the display panel unit 120 has a display area 210 for displaying an image, such as the OSD. Besides, it is assumed that the display panel unit 120 includes only four optical receivers 130_1-130_4 and the optical receivers 130_1-130_4 are disposed around the display area 210 (for example, outside the four corners of the display area 210).

Because the optical receivers 130_1-130_4 are respectively disposed in different areas of the display panel unit 120, the light beam emitted by the remote control unit 110 is transmitted to the optical receivers 130_1-130_4 through different transmission paths. Besides, because the power carried by the light beam varies along with the length of the transmission path of the light beam, the optical receivers 130_1-130_4 respectively receive the light beam carrying different power. Accordingly, the track recognizer 140 can determine the relative position of the remote control unit 110 based on the digital information (converted from the sensing voltage VI I-Vln) and obtain the moving track of the remote control unit 110. In addition, the track recognizer 140 generates a corresponding control command according to the moving track so that the panel controller 150 can control the OSD correspondingly.

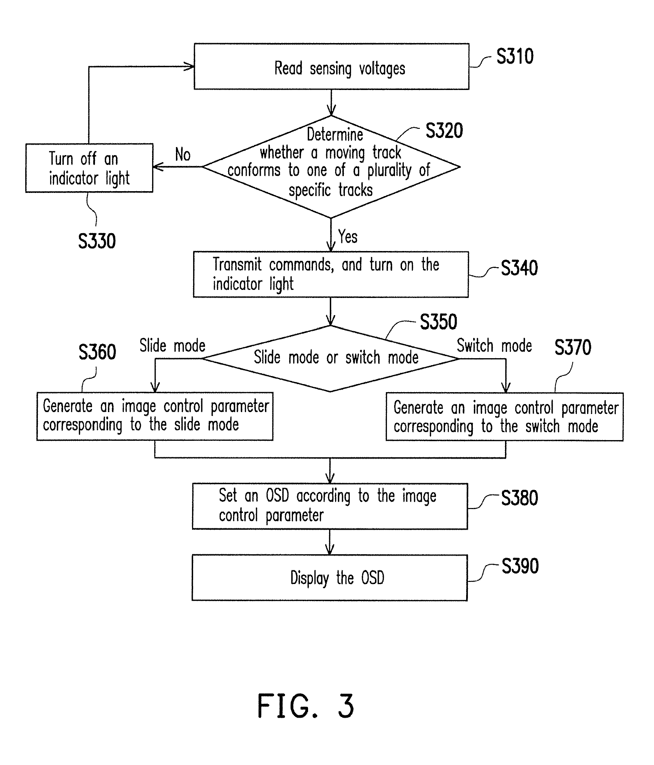

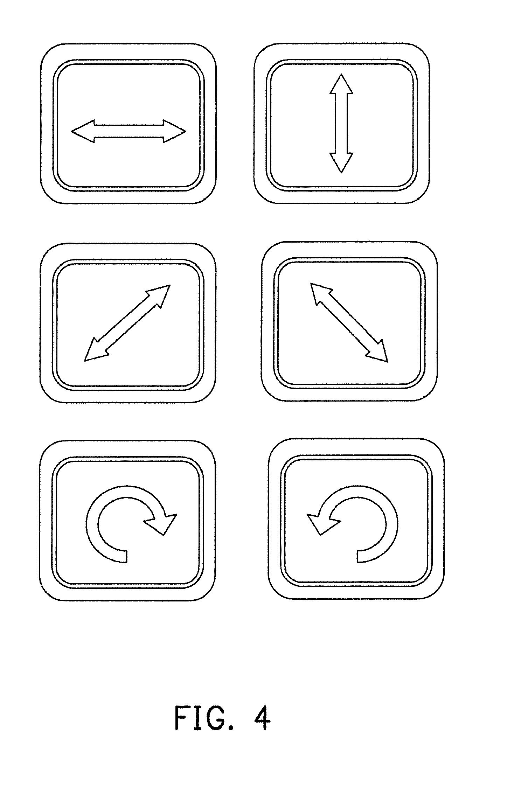

FIG. 3 is a flowchart illustrating the operation mechanism of a display device. Referring to FIGs. 1-3, in step S310, the sensing voltages V11-V1n generated by the optical receivers 130_1-130_n are read. Then, in step S320, whether the moving track of the remote control unit 110 conforms to one of a plurality of predetermined specific tracks is determined based on the sensing voltages VII-Vln. FIG. 4 is a diagram illustrating a plurality of specific tracks. As shown in FIG. 4, the specific tracks may indicate horizontal movement, vertical movement, right diagonal movement, left diagonal movement, clockwise circular movement, and anticlockwise circular movement.

Referring to FIG. 3 again, when the moving track does not conform to any one of the predetermined specific tracks, in step S330, an indicator light (not shown) on the display panel unit 120 is turned off, so as to notify the user that the display panel unit 120 does not receive the corresponding operation instruction. Contrarily, if the moving track conforms to one of the predetermined specific tracks, in step S340, the track recognizer 140 transmits an interrupt command and a control command to the panel controller 150 and turns on the indicator light on the display panel unit 120, so as to notify the user that the display panel unit 120 has received the corresponding operation instruction.

Next, in step S350, the panel controller 150 performs an interrupt operation according to the interrupt command and determines whether to enter a slide mode or a switch mode according to the control command. If the panel controller 150 determines to enter the slide mode, in step S360, an image control parameter corresponding to the slide mode is generated. If the panel controller 150 determines to enter the switch mode, in step S370, an image control parameter corresponding to the switch mode is generated. After that, in step S380, the panel controller 150 sets the OSD according to the corresponding image control parameter, and in step S390, the panel controller 150 displays the OSD.

It should be mentioned that the OSD includes a main menu and a plurality of submenus, and the main menu and the submenus respectively include a plurality of functional options. In aforementioned slide mode, the functional options in the main menu or the submenus are selected or adjusted, while in aforementioned switch mode, the main menu or the submenus may be entered or exited. However, aforementioned implementations are not intended to limit the scope of the present invention, and those having ordinary knowledge in the art can set different operation modes and specific tracks corresponding to the operation modes according to their own design requirements.

In summary, in the present invention, a remote control unit emits a light beam to a display panel unit, and a track recognizer in the display panel unit obtains a moving track of the remote control unit based on the sensing voltages generated by a plurality of optical receivers and generates a corresponding control command according to the moving track. Thus, a panel controller in the display panel unit sets an OSD according to the control command. In other words, a user can select or set a functional operation in the OSD by simply waving the remote control unit. In the present invention, the operation of the user is made very convenient, and as to the display panel unit, since it is not needed to dispose any button to accomplish the OSD setting operations, less hardware space in the display panel unit is consumed.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A display device (100), comprising:
a remote control unit (110), for emitting a light beam; and
a display panel unit (120), having a display area (210) for displaying an on-screen display, and the display panel unit (120) comprising:
a plurality of optical receivers (130_1-130_n), surrounding the display area (210), for receiving the light beam and converting the light beam into a plurality of sensing voltages (V11-V1n); and
a track recognizer (140), electrically connected to the optical receivers (130_1-130_n), for generating a control command according to the sensing voltages (V11-V1n) so that the display panel unit (120) sets the on-screen display.

2. The display device according to claim 1, wherein the remote control unit (110) comprises:
a start-up element (111), for receiving a supply voltage (VCC) and determining whether to output the supply voltage (VCC) in response to a user operation;
a light emitting diode (D1), having a first end electrically connected to the start-up element (111), for generating the light beam when the supply voltage (VCC) is received;
a first variable resistor (VR1), having a first end electrically connected to a second end of the light emitting diode (D1); and
a first resistor (R1), having a first end electrically connected to a second end of the first variable resistor (VR1) and a second end electrically connected to a ground.

3. The display device according to claim 2, wherein the start-up element (111) is a button or a touch switch.

4. The display device according to claim 2, wherein the light emitting diode (D1) is an infrared light emitting diode and the infrared light emitting diode generates an infrared light as the light beam.

5. The display device according to claim 1, wherein each of the optical receivers (130_1-130_n) comprises:
a photo transistor (PT1), for detecting the light beam;
a second variable resistor (VR2), having a first end electrically connected to a supply voltage (VCC) and a second end for generating one of the sensing voltages (V11-V1n);
a second resistor (R2), having a first end electrically connected to the second end of the second variable resistor (VR2); and
a NPN transistor (NT1), having a first end electrically connected to a second end of the second resistor (R2), a second end electrically connected to a ground, and a control end electrically connected to the photo transistor (PT1).

6. The display device according to claim 1, wherein the track recognizer (140) comprises:
an analog-to-digital converter (141), electrically connected to the optical receivers (130_1-130_n), for converting the sensing voltages (V11-V1n) into a plurality of digital information; and
a microcontroller (143), electrically connected to the analog-to-digital converter (141) through a programmable peripheral interface (142), for generating the control command according to the plurality of digital information.

7. The display device according to claim 1 further comprising a panel controller (150), wherein the panel controller (150) is electrically connected to the track recognizer (140), and the panel controller (150) sets the on-screen display according to the control command.
